# FASCICULE DE BREVET EUROPEEN

(11) **EP 2 282 456 B1**
(45) Date de publication et mention de la délivrance du brevet: **15.02.2017**
(21) Numéro de dépôt: 10354038.1
(22) Date de dépôt: 23.07.2010
(51) Int. Cl.: H04L 12/911

(54) **Réseau de communication sur puce avec garantie de service**
Kommunikationsnetz auf Chip mit Servicegarantie
Communication network on a chip with service guarantee

(30) Priorité: 29.07.2009 FR 0903734
(43) Date de publication de la demande: 09.02.2011
(73) Titulaire: Kalray, 91400 Orsay (FR)
(72) Inventeur: Harrand, Michel, 38120 Saint Egrève (FR); Durand, Yves, 38330 Saint Ismier (FR)
(74) Mandataire: de Jong, Jean Jacques

(56) Documents cités:
- US-A1- 2005 071 471
- BOLOTIN E ET AL: "Cost considerations in network on chip" INTEGRATION, THE VLSI JOURNAL, NORTH-HOLLAND PUBLISHING COMPANY. AMSTERDAM, NL, vol. 38, no. 1, 1 octobre 2004 (2004-10-01), pages 19-42, XP004641563 ISSN: 0167-9260
- CRUZ R L: "A CALCULUS FOR NETWORK DELAY, PART I: NETWORK ELEMENTS IN ISOLATION" IEEE TRANSACTIONS ON INFORMATION THEORY, IEEE, US, vol. 37, no. 1, 1 janvier 1991 (1991-01-01), pages 114-131, XP000168858 ISSN: 0018-9448
- BOLOTIN E ET AL: "QNoC: QoS architecture and design process for network on chip" JOURNAL OF SYSTEMS ARCHITECTURE, ELSEVIER BV, NL, vol. 50, no. 2-3, 1 février 2004 (2004-02-01), pages 105-128, XP004492175 ISSN: 1383-7621
- ISASK'HAR WALTER ET AL: "Access Regulation to Hot-Modules in Wormhole NoCs" NETWORKS-ON-CHIP, 2007. NOCS 2007. FIRST INTERNATIONAL SYMPOSIUM ON, IEEE, PI, 1 mai 2007 (2007-05-01), pages 137-148, XP031090752 ISBN: 978-0-7695-2773-4
- KEUN SUP SHIM ET AL: "Static virtual channel allocation in oblivious routing" NETWORKS-ON-CHIP, 2009. NOCS 2009. 3RD ACM/IEEE INTERNATIONAL SYMPOSIUM ON, IEEE, PISCATAWAY, NJ, USA, 10 mai 2009 (2009-05-10), pages 38-43, XP031472790 ISBN: 978-1-4244-4142-6

## Description

### Domaine technique de l'invention

L'invention est relative aux Systèmes sur Puce (« System on Chip » ou SoC), et plus particulièrement à la gestion des flux dans un réseau sur puce (« Network on Chip » ou NoC).

### État de la technique

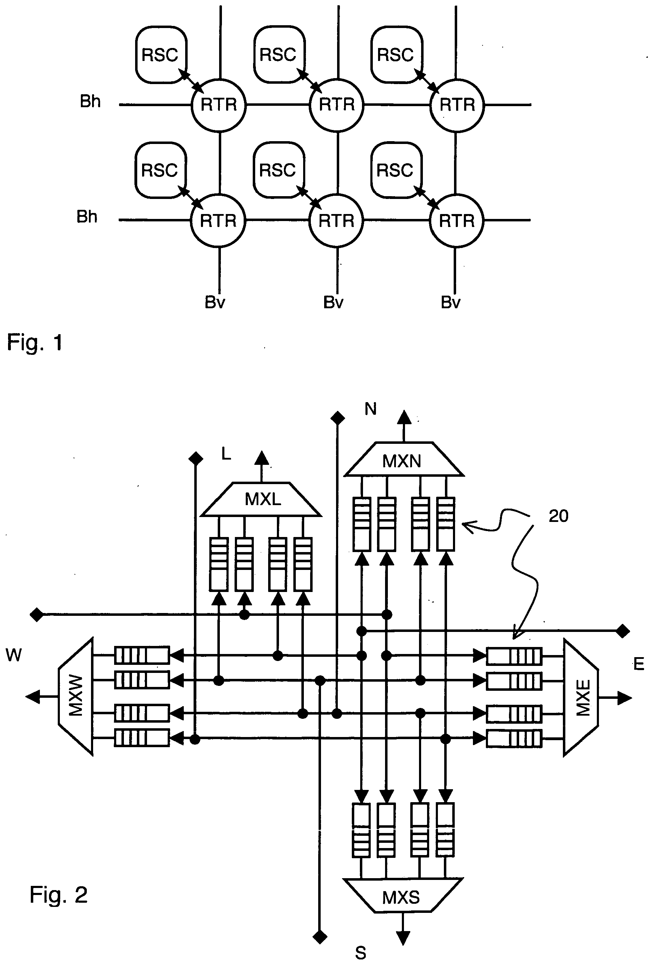

La figure 1 représente un exemple de réseau sur puce de topologie matricielle (ou maillée), tel que décrit dans le brevet Européen EP1701274.

Ce réseau comprend une pluralité de bus disposés en rangées (bus horizontaux Bh) et en colonnes (bus verticaux Bv). A chaque intersection entre un bus horizontal et un bus vertical est disposé un routeur RTR permettant de faire une connexion point à point entre chaque segment de bus (horizontal et vertical) qui lui arrive. En outre, chaque routeur RTR est relié à une ressource locale RSC, qui peut être productrice ou consommatrice de données.

Ce genre de réseau est destiné à faire communiquer n'importe quelle ressource RSC avec n'importe quelle autre ressource. Les ressources qui communiquent entre elles et les chemins qu'empruntent les communications sont généralement déterminés à l'avance et programmés dans la logique de gestion du réseau.

Les communications s'effectuent souvent par paquets de données. Un paquet est un ensemble de mots de la largeur du bus, précédé d'un en-tête qui comporte diverses informations relatives au paquet, notamment sa destination.

Dans les réseaux de télécommunications, par exemple ATM, on utilise de nombreuses techniques offrant une garantie de service. Ces techniques reposent généralement sur des limitations de débit imposées aux points d'entrée du réseau. L'article « A Calculus for Network Delay, Part I : Network Elements in Isolation » par Rene L. Cruz, paru dans IEEE Transactions on Information Theory, Vol. 37, No. 1, Janvier 1991, en décrit les principes généraux, entre autres questions de garantie de service.

L'article "Cost considérations in network on chip" par E. Bolotin propose d'affecter un niveau de service sélectionné parmi plusieurs niveaux possibles à chaque communication. Des niveaux de service différents sont matérialisés au niveau de chaque routeur par des queues parallèles vidées selon des priorités différentes

De tels réseaux fonctionnent en mode « connexion », c'est-à-dire qu'un noeud émetteur doit négocier une connexion avant de pouvoir envoyer des paquets. L'établissement d'une connexion définit aussi un chemin fixe par lequel les paquets transiteront entre la source et la destination pendant toute la durée de la connexion. Si la même source doit de nouveau envoyer des paquets à la même destination après interruption de la connexion, une nouvelle connexion est négociée qui peut attribuer un chemin différent, ce chemin étant calculé dynamiquement en fonction des conditions d'engorgement du réseau.

Les méthodes utilisées dans de tels réseaux pour offrir une garantie de service sont mises en oeuvre par des routeurs disposant d'importantes ressources de calcul. Ainsi, il n'est pas réaliste de tenter de les mettre en oeuvre dans un réseau sur puce, où on souhaite un réseau aussi simple que possible pour des raisons d'économie de surface silicium.

Ainsi, dans un NoC on préfère des méthodes de routage simples, par exemple de type trou de ver ou « worm-hole ». Avec une telle méthode, l'en-tête des paquets contient le chemin précis que doit emprunter le paquet, et les paquets sont insécables, c'est-à-dire qu'un routeur ne commence la transmission d'un nouveau paquet sur un segment de bus que si le paquet précédent a été intégralement transmis. Les routeurs s'interdisent de mélanger sur un segment des mots appartenant à des paquets différents - le « ver » reste entier.

La figure 2 représente schématiquement un routeur utilisable dans ce contexte. Le routeur gère cinq directions, à savoir les quatre directions correspondant aux segments de bus, dénommées Nord (N), Sud (S), Est (E) et Ouest (W), et une direction L correspondant à la ressource locale.

A chaque direction de sortie du routeur est associé un multiplexeur MX à quatre entrées. Ces quatre entrées correspondent aux entrées du routeur qui ne sont pas associées à la direction du multiplexeur. Par exemple, le multiplexeur MXN de la sortie Nord reçoit les entrées L, S, E et W du routeur. En d'autres termes, le routeur interdit qu'un paquet entrant par une direction ne ressorte par la même direction.

En outre, chaque entrée de multiplexeur est précédée d'une queue (FIFO) 20 destinée à stocker les mots des paquets en attente de sortie.

Un automate non représenté commande la sélection opérée par les multiplexeurs et l'écriture des mots entrant par les cinq directions dans les FIFOs.

Dans le cas d'un routage du type « worm-hole », l'en-tête du paquet entrant indique au routeur par quelle direction le paquet doit ressortir. L'automate décode l'en-tête et écrit les mots successifs du paquet dans la FIFO adéquate (parmi les quatre FIFOs auxquelles l'entrée est connectée).

Les multiplexeurs sont commandés pour traiter un paquet à la fois. En d'autres termes, les mots d'une même FIFO sont extraits consécutivement par le multiplexeur tant qu'ils appartiennent au même paquet. Lorsque le dernier mot d'un paquet a été extrait d'une FIFO, le multiplexeur traite la FIFO suivante selon une gestion de priorité déterminée. Cette gestion est le plus souvent circulaire (« Round Robin »), car elle est simple à réaliser et donne une chance égale à chaque direction entrante.

Un inconvénient de ce type de routage est qu'il peut introduire ponctuellement des latences grandes et indéterminables entre une source et la destination, ce qui le rend incompatible avec des applications exigeant une garantie de service (« Quality of Service » ou QoS), notamment les applications « temps réel ».

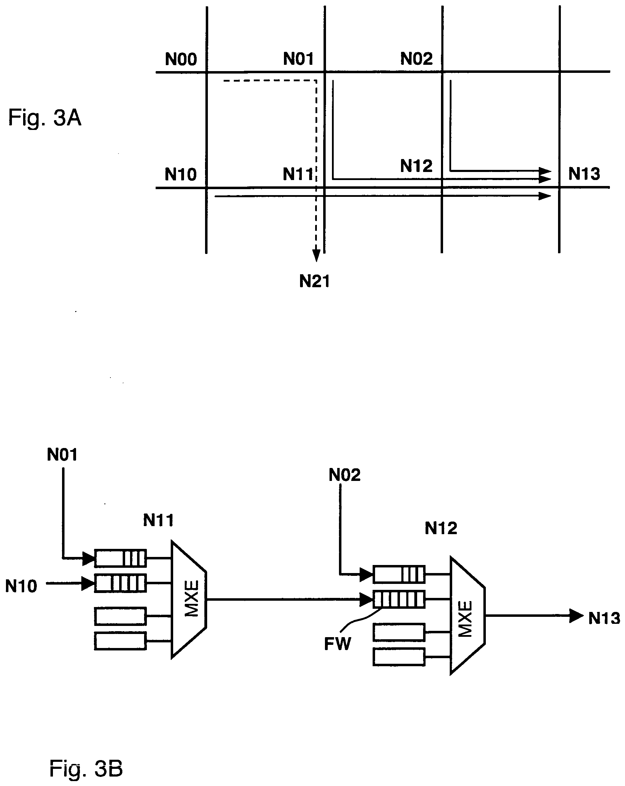

La figure 3A illustre une situation où cet inconvénient peut se produire. Le réseau est schématisé par une maille et des noeuds, où un noeud désigne indifféremment un routeur, une ressource ou l'ensemble des deux. Les noeuds sont désignés par Nxy, où x est l'indice de la rangée et y l'indice de la colonne.

Dans cet exemple, il y a trois communications simultanées en émission des noeuds N10, N01 et N02 vers le noeud N13. Les communications des noeuds N10 et N01 passent toutes deux par les noeuds N11 et N12. La communication du noeud N02 passe par le noeud N12. On conçoit que le segment entre les noeuds N12 et N13 est très sollicité.

La figure 3B représente les éléments des routeurs N11 et N12 affectés par ces communications. La FIFO Ouest FW du multiplexeur Est MXE du noeud N12 reçoit des paquets de deux communications, à savoir celles provenant des noeuds N01 et N10, transmises par le multiplexeur Est du noeud N11. Cette FIFO se remplit rapidement, et elle se remplit d'autant plus vite qu'elle n'est probablement pas encore en cours de vidage par le multiplexeur MXE, qui serait en train de vider la FIFO reliée au noeud N02.

Il est probable qu'au moment où la FIFO FW est pleine, elle contienne partiellement un paquet en cours de transmission par le noeud N11. Le noeud N12 signale au noeud N11, par un mécanisme de prévention de débordement, qu'il ne peut plus recevoir de données, puisque la donnée suivante provenant du noeud N11 appartiendrait forcément au paquet en cours d'écriture dans la FIFO FW. Le noeud N11 ne pouvant plus envoyer de données, les FIFOs de son multiplexeur MXE se remplissent rapidement, et le noeud N11 devra signaler à son tour à un noeud précédent de ne plus envoyer de données. Et ainsi de suite, jusqu'à ce que la FIFO FW commence à être vidée.

De plus, une communication N00-N01-N21 qui n'emprunte aucun chemin à fort trafic pourra néanmoins être bloquée un certain temps du fait que la communication N01-N13 sera bloquée à cause de l'engorgement du segment N12-N13. Le blocage de cette communication pourra elle-même retarder une communication N00-N02, et ainsi de suite...

La situation n'est pas débloquée instantanément lorsque la FIFO FW commence à être vidée. En effet, ce n'est que lorsqu'un emplacement de la FIFO FW devient effectivement disponible, que le noeud N12 signale au noeud N11 qu'il peut recevoir de nouveau des données. Ceci introduit une latence supplémentaire par chacun des noeuds qui étaient bloqués.

Une telle situation, pouvant se produire de manière aléatoire malgré les soins consacrés aux choix de routage lors de la programmation du réseau, peut entraîner une latence grande et inconnue dans l'acheminement des paquets.

Augmenter la taille des mémoires FIFO permet d'éloigner les situations où ce problème survient, mais ne permet pas de supprimer le problème si on veut utiliser des dimensions de FIFO raisonnables.

Pour améliorer la situation, on a proposé d'introduire des canaux virtuels dans ce type de réseau, comme cela est évoqué dans le brevet EP1701274. Dans un réseau à canaux virtuels, chacune des quatre entrées des multiplexeurs d'un routeur comporte autant de FIFOs que de canaux virtuels. Les paquets empruntent les mêmes liaisons physiques dans le réseau, et sont aiguillés en arrivant aux routeurs vers les FIFOs adéquates, la FIFO étant identifiée par le numéro de canal virtuel inscrit dans l'en-tête des paquets.

Ainsi, on peut associer des priorités différentes aux canaux virtuels, et des paquets prioritaires, ayant par exemple des contraintes de temps réel, seront acheminés dans un canal virtuel de priorité élevée que chaque routeur traitera en premier.

Cette solution est satisfaisante lorsque les canaux virtuels prioritaires sont empruntés par très peu de communications. Lorsque le nombre de communications empruntant ces canaux prioritaires augmente, on est confronté au même problème évoqué ci-dessus dans chaque canal virtuel, et la latence dans les canaux non-prioritaires devient encore plus grande.

Les réseaux synchrones à multiplexage temporel (TDM ou « Time Division Multiplex »), tel que le réseau dénommé « Aetheral » de Philips, ne présentent pas ces inconvénients, mais ils sont notablement plus complexes, très sensibles aux variations des paramètres et des technologies silicium, et tolèrent mal les aléas. Ils requièrent également un soin particulier dans le placement des éléments de la puce pour assurer le synchronisme en tout point de la puce.

### Résumé de l'invention

On constate qu'il existe un besoin de prévoir un réseau de structure simple mais offrant une garantie de service.

Pour tendre à satisfaire ce besoin, on prévoit un procédé selon la revendication 1 et un réseau maillé selon la revendication 5.

Selon un mode de réalisation, le procédé comporte les étapes suivantes : attribuer au segment de maille un budget d'unités de données sur un intervalle de temps de référence ; allouer un quota du budget à chaque communication susceptible d'emprunter le segment ; compter les unités de données insérées dans le réseau par chaque communication pendant un intervalle de référence courant ; suspendre une communication lorsque son compte d'unités de données insérées atteint le quota alloué à la communication ; et reprendre les communications suspendues à l'intervalle de référence suivant.

Afin de réduire la latence maximale du réseau, on peut prévoir de soumettre la communication à une limitation de débit supplémentaire au niveau d'un noeud intermédiaire entre la source et la destination de la communication.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1 représente schématiquement un réseau sur puce classique de topologie matricielle (ou maillée) ;
- la figure 2 représente schématiquement la structure d'un routeur d'un réseau de la figure 1 ;
- la figure 3A représente un exemple de communications établies entre noeuds du réseau de la figure 1 ;
- la figure 3B représente des éléments des routeurs impliqués dans les communications de la figure 3A ;
- la figure 4 représente schématiquement un réseau sur puce du type de la figure 1 incorporant des limiteurs de débit ;
- la figure 5 illustre un exemple d'allocation de débit dans un réseau du type de la figure 4 ;
- la figure 6 illustre un exemple d'émission de paquets par une ressource du réseau de la figure 4, montrant l'intervention d'une limitation de débit ;
- la figure 7 représente un tableau permettant de déterminer la taille minimale des FIFOs des routeurs et la latence maximale par routeur pour un exemple de paramètres d'un limiteur de débit ;
- la figure 8 représente un exemple détaillé de réalisation d'un limiteur de débit ;
- les figures 9A à 9C illustrent une situation où des paquets se regroupent et peuvent provoquer transitoirement un dépassement de la capacité de traitement des routeurs ;
- la figure 10 représente une solution permettant de limiter les regroupements de paquets ; et
- la figure 11 représente un mode de réalisation de circuit permettant une mise en oeuvre efficace de la solution de la figure 10.

### Description d'un mode de réalisation préféré de l'invention

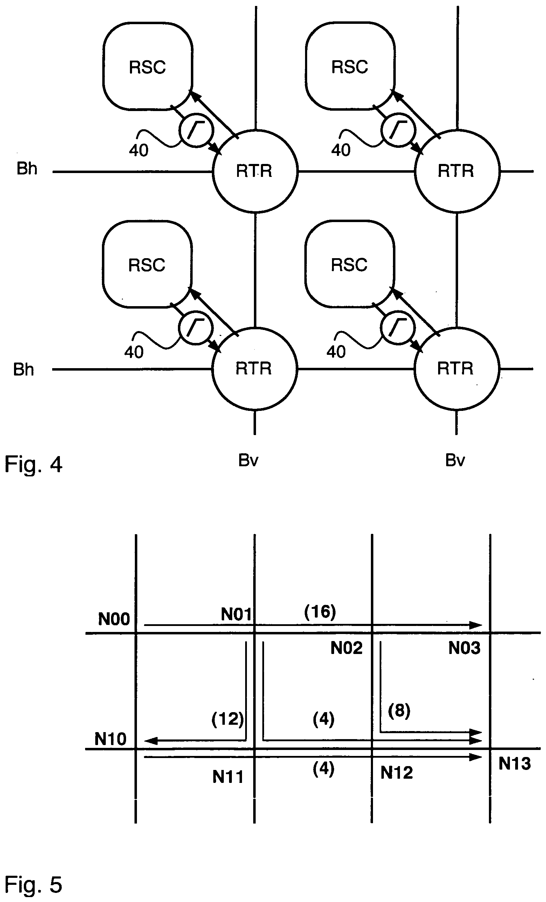

La figure 4 représente un réseau sur puce du type de la figure 1 incorporant une amélioration permettant d'établir la latence maximale du réseau à une valeur bornée et déterminable. Cette figure reprend des éléments du réseau de la figure 1 et les désigne par des mêmes références.

Selon le mode de réalisation représenté, le lien en émission vers le réseau de chaque ressource RSC comporte un limiteur de débit 40. Ce limiteur de débit est par exemple incorporé dans l'interface réseau de la ressource.

Chaque limiteur de débit 40 comprend une table dont les entrées associent un quota de débit à chaque communication en émission pouvant être établie par la ressource correspondante vers un autre élément du réseau.

Afin de garantir des performances optimales, une contrainte imposée au choix de ces quotas est que la somme des débits des communications susceptibles de passer dans le même sens dans un segment de réseau soit inférieure ou égale au débit maximal transmissible sur ce segment.

Cette règle de calcul des quotas présuppose que l'on connaisse les chemins empruntés par toutes les communications. Cela ne pose aucune difficulté dans un réseau sur puce où, pour des raisons de simplicité, le routage des communications est statique et défini à l'avance. Ce routage, ainsi que les quotas se présentent alors sous forme de paramètres de configuration stockés dans une mémoire non volatile et programmés dans la puce à chaque mise sous tension.

La figure 5 illustre un exemple d'allocation de débits dans un réseau du type de la figure 4. On utilise les mêmes notations de noeud qu'à la figure 3A précédemment décrite.

Le noeud N00 peut établir une communication en émission avec le noeud N03 passant par les noeuds N01 et N02.

Le noeud N01 peut établir deux communications en émission, l'une avec le noeud N10 en passant par le noeud N11, et l'autre avec le noeud N13 en passant par les noeuds N11 et N12.

Le noeud N02 peut établir une communication en émission avec le noeud N13 en passant par le noeud N12.

Le noeud N10 peut établir une communication en émission avec le noeud N13 en passant par les noeuds N11 et N12.

Les segments les plus sollicités sont le segment N12-N13 qui peut voir trois communications de même sens, et les segments N01-N11 et N11-N12 qui peuvent chacun voir deux communications de même sens.

On a indiqué entre parenthèses un exemple de quotas de débit associés aux communications, en supposant que le débit maximal est de 16 unités de données par unité de temps. Ainsi, la communication N00-N03 a le quota maximal 16, puisque cette communication est la seule à emprunter les segments par où elle passe. Toutes les autres communications empruntent des segments partagés entre d'autres communications, et elles doivent donc se partager le débit maximal. On alloue des quotas de 8, 4 et 4 respectivement aux communications N02-N13, N01-N13 et N10-N13 passant par le segment le plus encombré. Cela laisse un quota de 12 à la communication N01-N10.

Les contraintes imposées à l'allocation des quotas laisse néanmoins une souplesse dans de nombreux cas. La répartition des quotas se fait alors en allouant des quotas plus élevés aux communications plus exigeantes en bande passante.

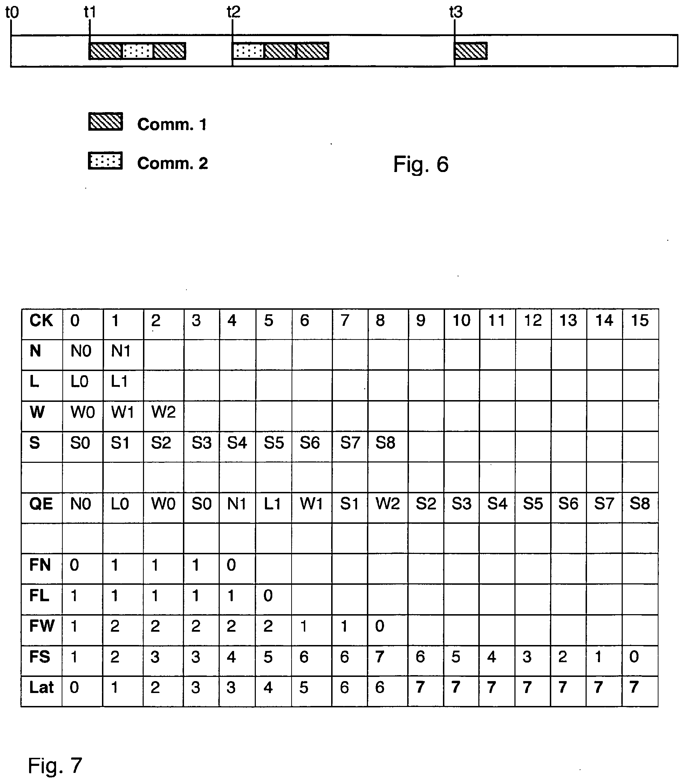

La figure 6 représente un exemple de limitation de débit mise en oeuvre par un mode de réalisation particulier de limiteur de débit 40. Dans ce mode de réalisation, le limiteur de débit opère sur des intervalles de temps fixes et consécutifs, ci-après dénommés intervalles de référence. Un intervalle de référence correspond à un budget d'unités de données, ce budget étant le nombre d'unités de données que l'on peut faire transiter à débit maximal dans un segment pendant la durée d'un intervalle de référence. Les quotas de débit des communications sont ainsi exprimés en unités de données par intervalle de référence.

Dans le cas d'un réseau à routage de type « worm-hole », où chaque paquet est insécable lors de son voyage à travers les noeuds, l'unité de données est de préférence le paquet. Dans d'autres types de réseau, l'unité de données pourra être autre, par exemple le mot.

La durée de l'intervalle de référence est de préférence la même pour chaque limiteur de débit 40 du réseau. Il n'est pas utile que les intervalles de référence démarrent au même instant au niveau de chaque limiteur, mais ils se succèdent de préférence à la même fréquence et sont de ce fait synchronisés sur la fréquence d'une base de temps commune.

Étant donné que la puce incorporant ce type de réseau peut être particulièrement grande, il peut exister des variations technologiques entre des points distants de la puce. Ainsi, les vitesses de fonctionnement des routeurs, qui sont asynchrones, peuvent varier géographiquement. Comme les limiteurs sont synchronisés sur une même base de temps, la durée des intervalles de référence reste rigoureusement constante sur l'ensemble de la puce. Pour les routeurs plus lents, la durée de l'intervalle de référence pourrait correspondre à moins que le budget, et, pour les routeurs plus rapides, à plus que le budget.

Dans le cas des routeurs plus rapides fonctionnant à plein régime, la transmission du dernier paquet se terminerait systématiquement avant la fin de chaque intervalle de référence. Cela signifierait qu'on n'exploite pas la bande passante disponible entre la fin du dernier paquet et la fin de l'intervalle, mais cela n'affecterait pas le bon fonctionnement du système.

Dans le cas des routeurs plus lents fonctionnant à plein régime, la transmission du dernier paquet d'un intervalle courant déborderait systématiquement sur l'intervalle suivant. Une conséquence serait que les FIFOs du routeur ne parviendraient pas à se vider complètement au cours d'un intervalle de référence. Cela introduirait un risque de débordement de FIFO et donc de blocage des communications entre noeuds, néanmoins avec une probabilité nettement inférieure à celle rencontrée dans un système classique.

Dans une approche sécuritaire, la durée de l'intervalle de référence sera donc choisie en fonction des routeurs les plus lents. Néanmoins, il n'est pas exclu qu'en évaluant les probabilités on puisse choisir une durée tendant vers celle correspondant aux routeurs les plus rapides.

La valeur du budget définit la granularité des quotas qu'on peut allouer aux communications. Plus le budget est grand, plus la granularité est fine, mais plus la latence maximale dans le réseau est élevée. Le choix de ce budget se fera donc en fonction du compromis granularité/latence souhaité.

À la figure 6, trois intervalles de temps consécutifs démarrent à des instants t0, t2 et t3. La ressource associée au limiteur est susceptible d'établir deux communications 1 et 2 en émission. On alloue par exemple des quotas respectifs de 2 et 1 paquets à ces communications.

À un instant t1, au cours du premier intervalle de temps, la ressource démarre les deux communications. La première doit émettre cinq paquets, tandis que la deuxième doit émettre deux paquets. Les quotas étant de 2 et 1, la ressource ne peut émettre que deux paquets de la communication 1 et un seul paquet de la communication 2 pendant le premier intervalle de temps. En admettant que la ressource émet les paquets selon une priorité circulaire, les paquets des communications 1 et 2 sont émis en alternance, comme cela est représenté.

Une fois qu'une communication a atteint son quota dans un intervalle, le limiteur signale à la ressource de cesser d'émettre pour cette communication. La ressource stocke alors les paquets dans sa mémoire locale en attente de pouvoir continuer l'émission à l'intervalle suivant. La ressource pourra dédier le temps d'attente à d'autres taches et communications.

À l'instant t2 démarre un nouvel intervalle de temps. La ressource émet le dernier paquet de la communication 2 puis deux nouveaux paquets de la communication 1. La communication 1 n'est pas encore terminée, car il lui reste un paquet à émettre.

À l'instant t3 démarre un nouvel intervalle de temps, au cours duquel est émis le dernier paquet de la communication 1.

La figure 7 représente un tableau permettant de déterminer la taille minimale (et optimale) des FIFOs des routeurs et la latence maximale introduite par les routeurs, dans le cas où le budget de débit est égal à 16.

Le tableau se rapporte, à titre d'exemple, à un multiplexeur Est et ses mémoires FIFO, tels que représentés à la figure 2. Les quatre premières rangées représentent les paquets arrivant sur chacune des mémoires FIFO des quatre entrées (N, L, W, S) du multiplexeur. La rangée QE représente la sortie du multiplexeur. Les rangées FN, FL, FW et FS indiquent le nombre de paquets stockés dans chacune des mémoires FIFO. La dernière rangée indique la latence en nombre de paquets subie par le paquet sortant.

Chaque colonne correspond à un cycle de transmission d'un paquet. L'ensemble des colonnes représentées correspond à un intervalle de temps de référence où le multiplexeur, grâce aux limiteurs de débit, ne traite au plus que le nombre de paquets correspondant au budget, ici 16. Tous les paquets reçus dans l'intervalle sortent également au cours du même intervalle.

La situation illustrée est celle du pire cas de latence et de taille de FIFO dans le cas où la priorité de traitement des entrées est circulaire. Cette situation se produit lorsque les 16 paquets du budget sont répartis, comme cela est illustré, en 2, 2, 3 et 9 paquets arrivant sur quatre entrées différentes, et que le cycle de priorité s'avère être dans un état tel que les FIFOs ayant le moins de paquets sont sélectionnées en premier. Le tableau a été établi pour le cas d'une priorité circulaire dans l'ordre des entrées N, L, W, S, qui reçoivent respectivement 2, 2, 3 et 9 paquets.

Au cycle 0, les quatre premiers paquets arrivent dans chacune des quatre FIFOs respectives. La FIFO FN est aussitôt traitée et son paquet N0 transmis par le multiplexeur. Les paquets L0, W0 et S0 sont stockés dans les FIFOs FL, FW et FS. Ainsi, les FIFOs FN, FL, FW et FS contiennent respectivement 0, 1, 1, 1 paquet.

Au cycle 1, le multiplexeur émet le paquet L0 contenu dans la FIFO FL tandis que de nouveaux paquets N1, L1, W1 et S1 arrivent et sont écrits dans les FIFOs FN, FL, FW et FS. Ces FIFOs contiennent respectivement 1, 1, 2, 2 paquets.

Au cycle 2, le multiplexeur émet le paquet W0 contenu dans la FIFO FW tandis que deux nouveaux paquets W2 et S2 arrivent dans les FIFOs FW et FS. Les FIFOs FN, FL, FW et FS contiennent respectivement 1, 1, 2, 3 paquets.

Au cycle 3, le multiplexeur émet le paquet S0 contenu dans la FIFO FS tandis qu'un paquet S3 arrive dans la FIFO FS. Le nombre de paquets dans les FIFOs est inchangé par rapport au cycle précédent.

A chacun des cinq cycles suivants, il arrive un nouveau paquet S dans la FIFO FS, tandis que les FIFOs continuent à être vidées de manière circulaire. Les FIFOs FN, FL et FW sont toutes vides à l'arrivée du dernier paquet S8. Le budget de 16 paquets est alors atteint et il n'arrive plus de paquet pour le multiplexeur jusqu'à l'intervalle de temps suivant.

Pendant les 7 cycles restants, la FIFO FS est vidée à chaque cycle pour extraire les derniers paquets S.

On s'aperçoit que le plus grand nombre de paquets stockés dans une FIFO est 7, ce qui correspond également à la latence maximale atteinte. La latence est la différence entre l'indice du cycle de sortie d'un paquet et l'indice du cycle d'arrivée du paquet.

Ainsi, en utilisant une limitation de débit avec un budget de 16 et une priorité circulaire, la latence maximale introduite par chaque routeur est de 7 paquets. On peut être amené à augmenter cette valeur par un délai systématique connu introduit par certains types de routeur (routeurs de type « pipeline »). La latence maximale du réseau est ainsi égale au nombre maximum de routeurs à traverser entre deux noeuds que multiplie la latence maximale des routeurs.

Cette latence est donc bornée et déterminable, d'où il résulte que cette solution offre une garantie de service et est compatible avec des applications temps réel.

La mémoire FIFO la plus sollicitée dans cet exemple doit pouvoir contenir 7 paquets. Si on utilise une mémoire distincte pour chaque FIFO, chacune doit avoir une taille de 7 paquets. La taille mémoire requise pour chaque multiplexeur serait alors de 28 paquets.

Dans certaines configurations de routeur, les mémoires FIFO sont réalisées à partir d'une mémoire unique associée à un automate de gestion adéquat. Dans ce cas, la mémoire doit être de taille à contenir tous les paquets dans une situation où le nombre de paquets stockés dans l'ensemble des FIFOs est maximal. Cette situation arrive lorsque le budget de paquets est réparti équitablement sur les entrées du routeur - quatre paquets par FIFO en reprenant l'exemple de la figure 7. On s'aperçoit alors que les FIFOs associées à un multiplexeur stockent ensemble au plus 12 paquets. Une mémoire unique servant à réaliser la fonction des quatre FIFOs a donc une taille de 12 paquets. Cette taille est compatible avec la situation de latence maximale de la figure 7, car le nombre de paquets stockés par l'ensemble des FIFOs n'atteint que 7 dans cette situation.

On vient de décrire une détermination de la latence maximale pour un cas particulier de budget et de gestion de priorité. L'homme du métier saura extrapoler ce calcul à d'autres situations.

Dans un réseau sur puce classique du type décrit en relation avec la figure 1, on a mentionné un mécanisme de prévention de débordement des FIFOs où un routeur signale à un routeur précédent qu'il ne peut plus recevoir de données lorsque l'une de ses FIFOs est pleine (mécanisme de serre mains ou « hand-shake »). Cela sous-tend qu'il y a un risque que les FIFOs débordent. Grâce au système de limitation de débit décrit ici, les FIFOs ne risquent jamais de déborder, à condition que leur taille soit choisie comme expliqué ici et que les quotas soient convenablement alloués. En d'autres termes, le réseau peut être simplifié en éliminant le mécanisme de « hand-shake ».

Tel que le système a été décrit, les quotas peuvent être alloués librement sous la responsabilité du concepteur qui définit le routage, c'est-à-dire que celui-ci pourrait allouer des quotas de manière que le budget soit dépassé dans certains segments. Ce dépassement de budget peut d'ailleurs être volontaire, par exemple si le concepteur sait que deux communications empruntant un même segment ne sont jamais simultanées. Pour parer à un risque d'erreur, on garderait le mécanisme de hand-shake. Par contre, si le concepteur utilise systématiquement un outil informatique qui vérifie la conformité des allocations de quotas, un mécanisme de hand-shake est superflu.

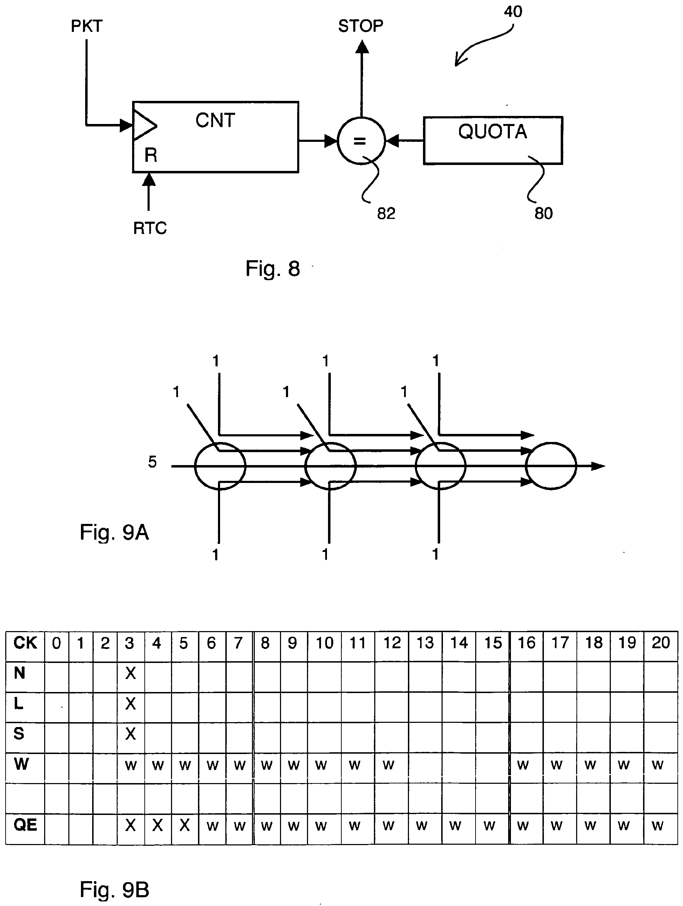

La figure 8 représente un exemple de réalisation d'un limiteur de débit 40 associé à une communication. Il comprend un registre 80 dans lequel est inscrit le quota de la communication. Un compteur CNT est cadencé par un signal PKT qui présente une impulsion pour chaque paquet transmis. Le compteur CNT est en outre réinitialisé périodiquement par un signal RTC établi par une base de temps commune au système, par exemple une horloge temps réel. Ce signal RTC détermine la succession des intervalles de temps de référence.

Un comparateur 82 active un signal d'arrêt STOP de la communication lorsque le contenu du compteur CNT devient égal au quota contenu dans le registre 80. A l'impulsion suivante de la base de temps RTC, le compteur CNT est réinitialisé, et le signal STOP désactivé.

Un tel limiteur de débit est associé à chaque communication en émission que peut établir la ressource associée. La communication en cours d'émission par la ressource est déterminée par un automate de gestion qui aiguille et comptabilise les paquets émis vers le routeur associé. Cet automate sera prévu pour aiguiller le signal de cadencement des paquets PKT vers le limiteur correspondant à la communication en cours, et prendre en compte le signal STOP de ce même limiteur. Dès que l'automate reçoit le signal STOP, il suspend la communication en cours et commute vers la communication suivante, s'il y en a une. Dans le cas où les paquets sont insécables, si le signal STOP est reçu au cours de la transmission d'un paquet, la communication est suspendue après que le dernier mot du paquet a été transmis.

La description du réseau a été faite jusqu'à maintenant dans une situation plutôt simple et qui est la plus probable, ceci afin d'en faciliter la compréhension. En fait, un réseau du type décrit ici peut être sujet à un phénomène de regroupement de paquets entraînant des dépassements localisés et transitoires du débit de certaines communications. Ces dépassements de débit transitoires entraînent que la taille des mémoires FIFO des routeurs impliqués doit être augmentée pour faire face à ce phénomène. Ce phénomène est illustré ci-après dans le cadre d'un cas simple, où le budget débit est de 8 (8 paquets par intervalle de référence).

La figure 9A représente une succession de noeuds traversés d'Ouest en Est par une communication de quota 5. En outre chaque noeud reçoit une communication de quota 1 sur chacune de ses trois autres directions, et chacune de ces communications est dirigée vers la sortie Est du noeud. Ainsi, chacun des segments entre les noeuds représentés est à son maximum d'occupation de 8. Pour des raisons de clarté, on n'a pas indiqué les directions de chacune des communications de quota 1 en sortie de chaque deuxième noeud atteint. Cette direction peut être quelconque parmi Nord, Sud et Locale.

La figure 9B illustre le début d'un phénomène de regroupement de paquets pouvant survenir dans la configuration de la figure 9A, par exemple au niveau du routeur Est du premier noeud de la figure 9A. Un paquet arrivant par l'une quelconque des entrées N, L et S d'un routeur est noté « X ». Les paquets arrivant par l'entrée Ouest (W) sont notés « w ».

Il ne se passe rien pendant les trois premiers cycles 0, 1, et 2. Au cycle 3, le routeur reçoit un paquet sur chacune de ses quatre entrées. A chacun des quatre cycles suivants, l'entrée W reçoit un paquet. Le budget est épuisé juste à la fin de l'intervalle.

Cinq nouveaux paquets arrivent sur l'entrée W dès le début de l'intervalle suivant, aux cycles 8 à 12. Aucun paquet n'arrive par les autres entrées. Cette situation se répète au troisième intervalle (non représenté en entier).

Dans le cas où la priorité circulaire de traitement des entrées finit par l'entrée W, la sortie QE du routeur est telle qu'illustrée. Les paquets X sortent aux cycles 3 à 5, et les paquets w sortent aux cycles suivants. On s'aperçoit que la sortie QE débite, à partir du cycle 6, quinze paquets w regroupés. Ces paquets arrivent tous sur l'entrée W du routeur E du noeud suivant. Ce routeur devra notamment traiter huit paquets w et possiblement trois autres paquets dans un seul intervalle de référence, c'est-à-dire trois paquets de plus que le budget.

A chaque noeud suivant, une nouvelle séquence de 5 paquets w peut se trouver ainsi regroupée avec la séquence précédente. Cela arrive notamment quand les conditions illustrées à la figure 9B se répètent à chaque noeud traversé.

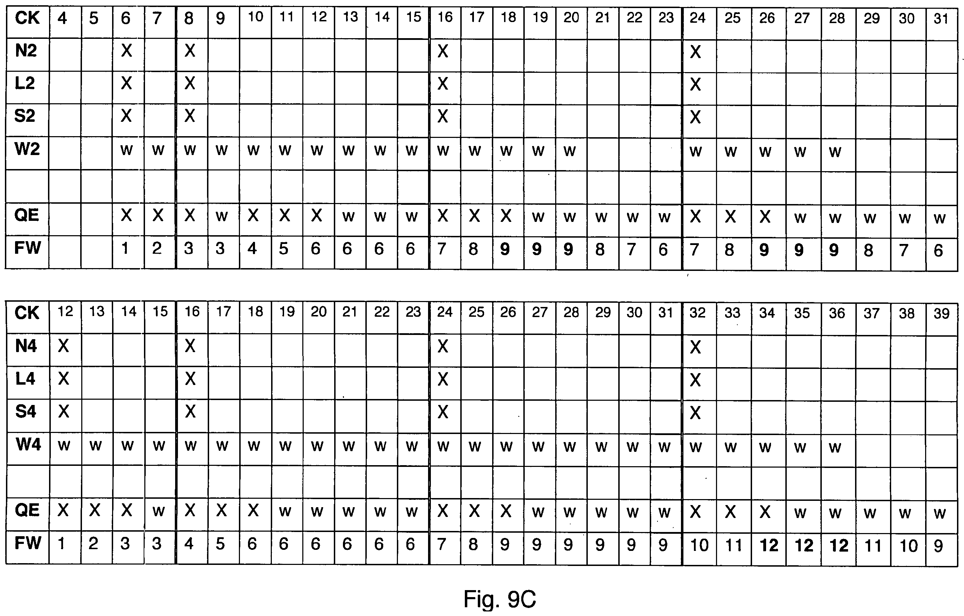

La figure 9C illustre la suite possible des événements au niveau du deuxième et quatrième noeuds de la figure 9A (respectivement dans les première et deuxième moitiés du tableau). Les entrées N, L, S, et W du routeur sont indexés par le numéro de noeud (2 et 4).

Les paquets w fournis par la sortie QE du routeur de la figure 9B arrivent sur l'entrée W2 à partir du cycle 6. Les autres entrées N2, L2 et S2 du routeur reçoivent chacune un paquet X aux cycles 6, 8, 16 et 24, c'est-à-dire dès le début de l'arrivée des paquets w, et à chaque début des intervalles de référence suivants.

Dans le cas où la priorité circulaire de traitement des entrées finit par l'entrée W2, la sortie QE du routeur est telle qu'illustrée. La ligne FW indique le remplissage de la FIFO W à chaque cycle. On s'aperçoit que le remplissage atteint un maximum de 9 dès le cycle 18, juste après un intervalle de temps où le nombre de paquets à traiter est supérieur au budget de 3.

Dans la deuxième partie du tableau, correspondant au quatrième routeur, les paquets reçus par l'entrée W4 arrivent selon une séquence pouvant correspondre à celle de la figure 9B après avoir traversé deux noeuds. Cette séquence comporte un flot continu de 25 paquets w commençant au cycle 12.

En outre, au cycle 12, les autres entrées N4, L4 et S4 du routeur reçoivent chacune un paquet X. Au début des intervalles suivants, c'est-à-dire aux cycles 16, 24 et 32, le routeur reçoit également un paquet X sur chacune des entrées N4, L4 et S4.

La sortie QE correspond de nouveau au cas où la priorité est telle que l'entrée W4 est traitée en dernier. On s'aperçoit que le remplissage de la FIFO W atteint un maximum de 12 au cycle 26, peu après que le routeur a dû traiter deux intervalles de référence consécutifs où le nombre de paquets dépassait le budget de 3.

Ces exemples simplifiés illustrent que la taille de la FIFO doit être dimensionnée en fonction du nombre maximal de noeuds que peut traverser une communication.

En fait, le réseau à limitation de débit décrit ici s'avère être un cas particulier d'un réseau à « régulation (σ, ρ) » dont la théorie générale est décrite, par exemple, dans l'article de Rene L. Cruz mentionné dans la partie introductive de la présente demande de brevet. Le terme σ désigne la taille de salve maximale d'une communication, et p son débit moyen à long terme.

Cette théorie, appliquée au réseau décrit ici, révèle que le remplissage maximal des FIFOs est égal à F + 3h, où F est la taille maximale calculée pour les FIFOs sans tenir compte du phénomène de regroupement (on a vu que F = 7 en utilisant un budget de 16 paquets par intervalle), et h est le nombre maximal de noeuds impliqués dans une communication. Le terme « 3 » correspond au nombre d'entrées du routeur, moins 1.

Etant donné que les chemins des communications sont fixés à l'avance, on connaît le nombre maximal de noeuds impliqués dans les communications. On sait donc calculer la taille minimale des FIFOs, qui détermine en outre la latence maximale introduite par le réseau.

On remarque que la taille des FIFOs augmente de 3 paquets dès le premier noeud impliqué. Cela est dû au fait, illustré à la figure 9B, que le budget du premier intervalle de référence peut être utilisé à la fin seulement de l'intervalle, et provoquer, dès le premier noeud, un regroupement avec des paquets arrivant en début de l'intervalle suivant.

Cet effet de bord lié au premier noeud impliqué peut être évité en configurant le limiteur de débit pour qu'il repousse à l'intervalle suivant tout paquet arrivant dans les trois derniers cycles de l'intervalle, pour des communications de budget supérieur à 3.

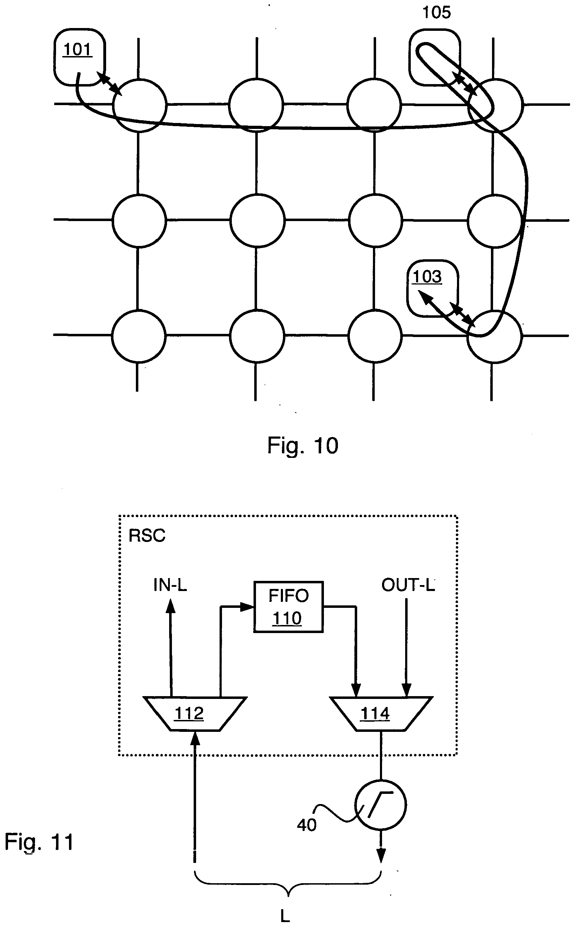

La figure 10 illustre une solution permettant de réduire significativement la taille minimale des FIFOs, et donc la latence du réseau.

Une communication entre une ressource 101 et une ressource 103 implique 6 noeuds. En supposant que 6 soit le nombre maximal de noeuds impliqués dans les communications sur ce réseau, la taille des FIFOs doit être choisie au moins égale à F + 3x6, soit 25 dans le cas où le budget est de 16 paquets par intervalle. La latence maximale est alors de 5x25 = 125 paquets.

Pour réduire la taille des FIFOs, on découpe virtuellement les chemins les plus longs en plusieurs chemins courts. Pour cela, comme cela est représenté en figure 10, on fait sortir la communication par un noeud intermédiaire, qui la réinjecte dans le réseau comme si c'était une communication émanant de ce noeud, c'est-à-dire en passant par son limiteur de débit. Le limiteur de débit assure dans ce cas que des paquets regroupés soient de nouveau dégroupés sur plusieurs intervalles de référence, en respectant le quota alloué à la communication.

La taille des FIFOs est alors choisie en fonction du plus long sous-chemin résultant du découpage. Dans l'exemple de la figure 10, le plus long sous-chemin implique 4 noeuds, d'où il résulte une taille de FIFO de 7 + 3x4 = 19 paquets, et une latence de 3x19 = 57 paquets.

Cette technique de « découpage » n'augmente pas globalement le retard subi par la communication. En effet, les premiers paquets reçus par le noeud intermédiaire, qui sont ceux ayant subi le plus de retard en cas de regroupement, seront réémis aussitôt. Les derniers paquets sont ceux ayant subi le moins de retard en cas de regroupement, et le fait qu'il soient réémis à des intervalles de référence ultérieurs ne fait qu'égaliser leur retard avec le retard subi par les premiers paquets. En outre, le quota de la communication étant déjà réservé sur ce chemin, le noeud intermédiaire n'est pas susceptible d'interférer plus que ne le permettent les quotas des autres communications passant sur ce même chemin.

La technique de découpage pourrait être mise en oeuvre de manière entièrement logicielle en découpant logiquement une communication en plusieurs sous-communications passant par des noeuds intermédiaires. Chaque noeud intermédiaire devient un destinataire qui exécutera une tache pour traiter la communication tout simplement en la recopiant vers un autre noeud.

Cette mise en oeuvre implique néanmoins un temps de traitement qui risque d'introduire un retard non négligeable dans la communication vers le destinataire final.

La figure 11 représente schématiquement un circuit très simple permettant une mise en oeuvre matérielle de cette technique de découpage. La ressource RSC connectée au noeud comprend une mémoire FIFO 110 destinée à stocker les paquets à réémettre sur le réseau.

Le lien L entrant, provenant du routeur L du noeud, arrive sur un démultiplexeur 112. La logique de commande de ce démultiplexeur est prévue pour reconnaître un paquet destiné à la ressource locale, auquel cas, le paquet est envoyé vers la ressource locale par une ligne IN-L ; et un paquet destiné à être réémis sur le réseau, auquel cas le paquet est empilé dans la mémoire FIFO 110.

La sortie d'un multiplexeur 114 est reliée à l'entrée L du noeud par l'intermédiaire du limiteur de débit 40. Le multiplexeur 114 opère une sélection entre un paquet provenant de la ressource locale par une ligne OUT-L, et un paquet de la mémoire FIFO 110.

Les paquets d'une communication découpée seront munis d'un en-tête identifiant le noeud intermédiaire (ou les noeuds intermédiaires). Dans le cas d'un acheminement « worm-hole », l'en-tête comporte normalement deux bits par noeud à traverser, indiquant la direction suivante au niveau de chaque noeud. Cette « direction suivante » pour chaque noeud intermédiaire sera la direction locale.

Le noeud oriente alors le paquet sur son routeur L où il attend son tour dans la FIFO correspondante du routeur (la FIFO W dans le cas de la figure 10) avant d'arriver sur le démultiplexeur 112. Le démultiplexeur 112 reconnaît la nature du paquet et l'empile dans la mémoire FIFO 110. L'arrivée du paquet dans la mémoire FIFO 110 est signalée au multiplexeur 114 qui se charge, en tenant compte du budget disponible déterminé par le limiteur de débit 40, de le renvoyer sur le réseau.

La nature du paquet (à destination de la ressource locale ou à réémettre) pourra être reconnue en rapprochant le numéro de communication véhiculé dans l'en-tête à une table de routage locale. Cette table de routage peut contenir tous les numéros de communication du réseau et leurs destinations, ou bien seulement les numéros des communications destinées à la ressource locale. Dans le premier cas, l'en-tête des paquets peut ne contenir que le chemin les menant au noeud intermédiaire. Le noeud intermédiaire pourra, en réémettant les paquets, établir le chemin vers leur destination finale et l'insérer dans leur en-tête.

Dans le deuxième cas de table de routage, l'en-tête des paquets contient le chemin entier vers la destination finale, plus l'information identifiant le noeud intermédiaire. Le noeud intermédiaire, ne trouvant pas le numéro de communication dans sa table de routage, détermine que les paquets doivent être réémis. Ceux-ci sont réémis avec, dans leur en-tête, le restant du chemin à parcourir vers leur destination finale.

Les paquets ainsi réémis sont ensuite traités comme des paquets provenant de la ressource locale elle-même.

On remarque qu'un paquet doit passer par les FIFOs de deux routeurs dans chaque noeud intermédiaire - celle du routeur L, puis celle du routeur pointant vers la destination finale. De plus, de tels paquets peuvent se superposer à une communication normale entrante de la ressource locale. Pour éviter les problèmes que cela peut engendrer, les noeuds intermédiaires seront choisis de manière que les communications entrantes de leurs ressources locales soient inexistantes, ou du moins de faible débit.

Une autre solution pour éviter ce problème est que le noeud renvoie de tels paquets directement dans la FIFO 110, sans passer par le routeur L. Cela implique de prévoir un bus supplémentaire entre le noeud et la ressource locale. On pourra alors se passer du démultiplexeur 112.

A l'aide d'un circuit tel que celui de la figure 11 prévu au niveau de chaque ressource, il devient particulièrement aisé de mettre en oeuvre des découpages de communications. En effet, il suffit d'identifier dans les en-têtes des paquets un ou plusieurs noeuds intermédiaires, et ce sont ces noeuds intermédiaires qui s'occupent du reste. Cette opération peut être faite manuellement par le concepteur du réseau, ou bien de façon automatisée par un outil de conception prévu pour optimiser les longueurs des chemins.

## Revendications

1. Procédé de limitation de débit d'une communication dans un réseau maillé, comprenant les étapes suivantes :
- attribuer des chemins statiques respectifs aux communications susceptibles d'être établies entre des noeuds source et des noeuds cible sur le réseau, de sorte qu'au moins un segment de maille (N12-N13) entre des noeuds adjacents est traversé par de multiples chemins statiques ;
- allouer statiquement des quotas de débit respectifs (8, 4, 4) aux communications de manière que, pour tout segment de maille, la somme des quotas alloués aux communications susceptibles d'emprunter le segment soit inférieure ou égale à un débit nominal (16) du segment de maille ;
- émettre des unités de données d'une communication courante ;
- mesurer le débit de la communication courante au noeud source de la communication ; et
- suspendre temporairement la communication courante au noeud source (40) lorsque son quota est atteint.

2. Procédé selon la revendication 1, dans lequel le débit nominal de chaque segment de maille est représenté par un budget d'unités de données (16) sur un intervalle de temps de référence, et chaque quota de débit est représenté par un quota respectif du budget d'unités de donnés, le procédé comprenant les étapes suivantes :
- émettre des unités de données de la communication courante sur une succession d'intervalles de référence ;
- mesurer le débit en comptant les unités de données de la communication courante pendant chaque intervalle de référence ;
- suspendre la communication courante lorsque son compte d'unités de données atteint le quota alloué à la communication, et
- reprendre la communication courante à l'intervalle de référence suivant.

3. Procédé selon la revendication 2, comprenant l'étape de soumettre la communication courante à une limitation de débit supplémentaire au niveau d'un noeud intermédiaire entre la source et la destination de la communication courante.

4. Procédé selon la revendication 3, dans lequel la limitation de débit supplémentaire comprend les étapes suivantes :
- recevoir la communication courante par une ressource connectée au noeud intermédiaire ; et
- renvoyer la communication courante par la ressource sur le réseau.

5. Réseau maillé comprenant :
- des noeuds source susceptibles d'initier des communications empruntant des chemins statiques respectifs vers des noeuds destination, de sorte qu'au moins un segment de maille (N12-N13) entre des noeuds adjacents est traversé par de multiples chemins statiques ;
chaque noeud source comprenant :
- un emplacement mémoire (80) pour chaque communication, contenant, en fonctionnement, une valeur constante correspondant à un quota de débit alloué à la communication, de manière que, pour tout segment de maille, la somme des quotas de débit alloués aux communications susceptibles d'emprunter le segment soit inférieure ou égale à un débit nominal du segment de maille, et
- un limiteur de débit (CNT, RTC, 82) configuré pour mesurer le débit d'une communication courante et suspendre la communication courante (40) lorsque son quota est atteint.

6. Réseau selon la revendication 5, **caractérisé en ce que** le limiteur de débit comprend :
- un compteur (CNT) d'unités de données émises par la communication courante,
- une base de temps (RTC) agencée pour réinitialiser le compteur de manière périodique, la période correspondant à la durée de transmission à débit nominal sur le segment d'un nombre d'unités de données représentatif d'un budget de débit, et
- des moyens (82) pour suspendre la communication courante lorsque le compteur atteint une valeur correspondant au quota alloué à la communication courante.

7. Réseau selon la revendication 6, **caractérisé en ce qu'**un noeud destination comprend des moyens (110, 112, 114) pour s'identifier comme un destinataire intermédiaire de la communication courante, et pour réémettre la communication courante sur le réseau en passant par son limiteur de débit.

8. Réseau selon la revendication 7, **caractérisé en ce que** les moyens d'identification opèrent sur un identifiant véhiculé par un en-tête de la communication courante, identifiant représentatif du chemin statique attribué à la communication.

## Patentansprüche

1. Verfahren zur Begrenzung der Rate einer Kommunikation in einem vermaschten Netz, umfassend die folgenden Schritte, die darin bestehen:
- jeweilige statische Wege denjenigen Kommunikationen zuzuordnen, die in dem Netz zwischen Quellenknoten und Zielknoten hergestellt werden können, so dass mindestens ein Maschensegment (N12-N13) zwischen angrenzenden Knoten von mehrfachen statischen Wegen durchzogen wird;
- den Kommunikationen jeweilige Ratenquoten (8, 4, 4) statisch zuzuweisen, so dass für jedes Maschensegment die Summe der Quoten, die denjenigen Kommunikationen zugewiesen worden sind, die das Segment benutzen können, kleiner als oder gleich wie eine Nennrate (16) des Maschensegments ist;
- Dateneinheiten einer laufenden Kommunikation zu senden;
- die Rate der laufenden Kommunikation am Quellenknoten der Kommunikation zu messen; und
- die laufende Kommunikation am Quellenknoten (40) vorübergehend zu unterbrechen, wenn ihre Quote erreicht worden ist.

2. Verfahren nach Anspruch 1, bei dem die Nennrate jedes Maschensegments über ein Bezugszeitintervall von einem Dateneinheitsbudget (16) vertreten ist, und jede Ratenquote von einer jeweiligen Quote des Dateneinheitsbudgets vertreten ist, wobei das Verfahren die folgenden Schritte umfasst, die darin bestehen:
- Dateneinheiten der laufenden Kommunikation über aufeinanderfolgende Bezugsintervalle zu senden;
- die Rate zu messen, indem die Dateneinheiten der laufenden Kommunikation während jedes Bezugsintervalls gezählt werden;
- die laufende Kommunikation zu unterbrechen, wenn ihre Dateneinheitszahl die der Kommunikation zugewiesene Quote erreicht hat, und
- die laufende Kommunikation am nächsten Bezugsintervall wiederaufzunehmen.

3. Verfahren nach Anspruch 2, umfassend den Schritt, der darin besteht, eine zusätzliche Ratenbegrenzung auf die laufende Kommunikation anzuwenden, und zwar an einem Zwischenknoten zwischen der Quelle und dem Ziel der laufenden Kommunikation.

4. Verfahren nach Anspruch 3, bei dem die zusätzliche Ratenbegrenzung die folgenden Schritte umfasst, die darin bestehen:
- die laufende Kommunikation über eine mit dem Zwischenknoten verbundene Ressource zu empfangen; und
- die laufende Kommunikation über die Ressource auf das Netz weiterzusenden.

5. Vermaschtes Netz umfassend:
- Quellenknoten, die Kommunikationen initiieren können, die jeweilige statische Wege zu Zielknoten benutzen, so dass mindestens ein Maschensegment (N12-N13) zwischen angrenzenden Knoten von mehrfachen statischen Wege durchzogen wird;
wobei jeder Quellenknoten folgendes umfasst:
- für jede Kommunikation einen Speicherplatz (80), der in Betrieb einen konstanten Wert enthält, der einer der Kommunikation zugewiesenen Ratenquote entspricht, so dass für jedes Maschensegment die Summe der Ratenquoten, die denjenigen Kommunikationen zugewiesen worden sind, die das Segment benutzen können, kleiner als oder gleich wie eine Nennrate des Maschensegments ist, und
- einen Ratenbegrenzer (CNT, RTC, 82), der konfiguriert ist, um die Rate einer laufenden Kommunikation zu messen und die laufende Kommunikation (40) zu unterbrechen, wenn ihre Quote erreicht wird.

6. Netz nach Anspruch 5, **dadurch gekennzeichnet, dass** der Ratenbegrenzer folgendes umfasst:
- einen Zähler (CNT) von Dateneinheiten, die durch die laufende Kommunikation gesendet werden,
- eine Zeitbasis (RTC), die angeordnet ist, um den Zähler periodisch rückzusetzen, wobei die Periode der Übertragungsdauer einer für ein Ratenbudget repräsentativen Dateneinheitsanzahl zur Nennrate auf das Segment entspricht, und
- Mittel (82) um die laufende Kommunikation zu unterbrechen, wenn der Zähler einen Wert erreicht hat, der der Quote entspricht, die der laufenden Kommunikation zugewiesen worden ist.

7. Netz nach Anspruch 6, **dadurch gekennzeichnet, dass** ein Zielknoten Mittel (110, 112, 114) umfasst, um sich als Zwischenempfänger der laufenden Kommunikation zu identifizieren, und um die laufende Kommunikation auf das Netz über ihren Ratenbegrenzer weiterzusenden.

8. Netz nach Anspruch 7, **dadurch gekennzeichnet, dass** die Identifizierungsmittel eine in einem Header der laufenden Kommunikation enthaltende Kennung betreffen, wobei die Kennung repräsentativ für den der Kommunikation zugeordneten statischen Weg ist.

## Claims

1. A method for limiting the throughput of a communication in a meshed network, comprising the following steps:
• allocating respective static paths to potential communications between source nodes and destination nodes of the network, such that at least one mesh segment (N12-N13) between adjacent network nodes is crossed by multiple static paths;
• statically allocating respective throughput quotas (8, 4, 4) to the communications, such that, in any mesh segment, the sum of the quotas allocated to the communications that can take the mesh segment is at most equal to a nominal throughput (16) of the mesh segment;
• transmitting data units of a current communication;
• measuring the throughput of the current communication at the source node of the communication; and
• temporarily suspending the current communication at the source node (40) when its quota is reached.

2. The method according to claim 1, wherein the nominal throughput of each mesh segment is represented by a budget of data units (16) over a reference time interval, and each throughput quota is represented by a respective quota of the budget of data units, the method comprising the following steps:
• transmitting data units of the current communication over a succession of reference intervals;
• measuring the throughput by counting data units of the current communication during each reference interval;
• suspending the current communication when its count of data units reaches the quota allocated to the communication; and
• resuming the current communication in the next reference interval.

3. The method according to claim 2 comprising the step of subjecting the current communication to an additional throughput limiting at the level of an intermediate node between a source and a destination of the current communication.

4. The method according to claim 3 wherein the additional throughput limiting comprises:
• receiving the current communication by a resource connected to the intermediate node, and
• retransmitting the current communication by the resource over the network.

5. A meshed network comprising:
• source nodes able to initiate communications to destination nodes through respective statically allocated paths, such that at least one mesh segment (N12-N13) between adjacent network nodes is crossed by multiple static paths;
each node comprising:
• a memory location (80) for each static path, containing, in operation, a constant value corresponding to a throughput quota allocated to the communication, such that, in any mesh segment, the sum of the throughput quotas allocated to the communications that can take the mesh segment is at most equal to a nominal throughput of the mesh segment; and
• a throughput limiter (CNT, RTC, 82) configured for measuring a throughput of a current communication and suspending the current communication (40) when its quota is reached.

6. The network according to claim 5 wherein the throughput limiter comprises:
• a counter for counting data units transmitted by the current communication;
• a time base (RTC) arranged to periodically reinitialize the counter, the period corresponding to the transmission time at the nominal throughput on the mesh segment of a number of data units representative of a throughput budget; and
• means (82) for suspending the current communication when the counter reaches a value corresponding to the throughput quota allocated to the current communication.

7. The network according to claim 6 wherein a destination node comprises means (110, 112, 114) for identifying itself as an intermediate recipient of the current communication and for retransmitting the current communication to the network through its throughput limiter.

8. The network according to claim 7, wherein the identifying means operate on an identifier conveyed by a header of the current communication, which identifier is representative of the static path allocated to the communication.
